Europäisches Patentamt

European Patent Office

Office européen des brevets

(11) Publication number: **0 571 996 A1**

# EUROPEAN PATENT APPLICATION

(21) Application number: **93108565.8**

(22) Date of filing: **27.05.93**

(51) Int. Cl.⁵: **G02F 1/1335**

(30) Priority: **28.05.92 JP 136705/92**

(43) Date of publication of application:
**01.12.93 Bulletin 93/48**

(84) Designated Contracting States:
**DE FR GB IT NL**

(71) Applicant: **ROHM CO., LTD.**
**21, Saiin Mizosaki-cho**
**Ukyo-ku**
**Kyoto-shi Kyoto 615(JP)**

(72) Inventor: **Kanemoto, Kazuki, c/o Rohm Co.,**
**Ltd.**
**21, Saiin Mizosaki-cho,**
**Ukyo-ku**
**Kyoto-shi(JP)**

(74) Representative: **Tiedtke, Harro, Dipl.-Ing.**
**Patentanwaltsbüro Tiedtke-Bühling-Kinne &**
**Partner,**
**Bavariaring 4**
**D-80336 München (DE)**

(54) **Liquid crystal display device.**

(57) A liquid crystal display device composed of a pair of transparent substrates, a twisted nematic type liquid crystal layer interposed between said transparent substrates, a pair of polarizers (2,3), each of which is arranged on the outside surface of said transparent substrate, and an orientation film formed on the side of said liquid crystal layer of said transparent substrates, each of said polarizers being formed in such a manner polarizers that a polarizing axis (C) of said polarizers is the same and said polarizing axis (D) is perpendicular to one of rubbing direction of said orientation film, said liquid crystal display further including a phase shifting plate (6) interposed between said transparent substrate located in a side where the rubbing direction of said orientation film is perpendicular to the polarizing axis of said polarizer.

FIG. 1

The present invention relates to a liquid crystal display device, and more paricularly, to a liquid crystal display device wherein a tone of a background color is not varied in accordance with the viewing angle.

A liquid crytal display device convertes electrical signals into optical information by causing a state of a liquid crystal to vary. Depending on the way of converting information, liquid crystal devices are classified into a twisted nematic type, an electrically controlled double refraction type, and so forth.

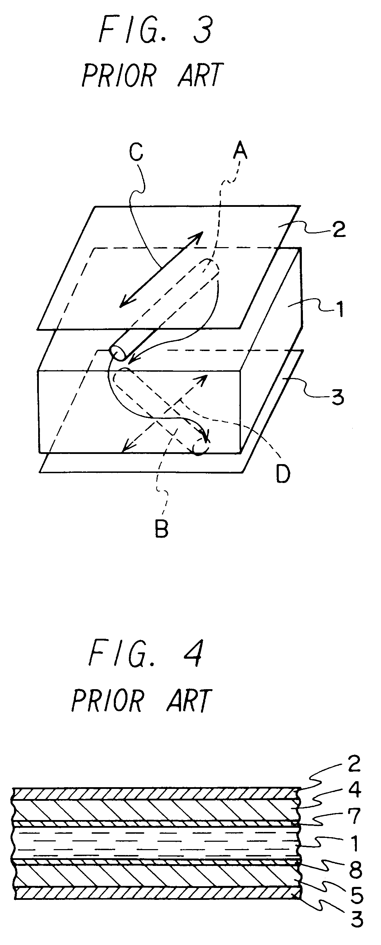

Figs. 3 and 4 show an example of a conventional twisted nematic type (hereinafter referred to as TN type) liquid crystal display device. Fig. 3 is an exploded perspective view showing an important fragment of the twisted nematic type liquid crystal display device. Fig. 4 is a sectional view thereof. In these figures, a front polarizer 2 is provided on the display side of a liquid crystal layer 1 with sandwiching a transparent substrate 4, for example, made of glass, a rear polarizer 3 is provided on the reverse side thereof with sandwiching a transparent substrate 5. The liquid crystal layer 1 is interposed between the transparent substrates 4 and 5 which are spaced with a predetermined distance from each other with spacers (not shown). In each of the transparent substrates 4 and 5, a transparent conductive film (not shown) and an orientation film 7 and 8 made of polyimide or poly amic acid, thickness of which is about 700 to about 900 Å, are formed and in the orientation film 7 and 8 rubbing treatment is subjected in order that a liquid crystal molecule orients in the same direction. In the TN type liquid crystal, the liquid crystal molecule is twisted 90° in molecular orientation. For that reason, a rubbing direction A in the front side is substantially perpendicular to that of a rubbing direction B in the rear side. The transparent conductive film is formed so that voltage can be applied to each of pixels (or picture elements). Accordingly, the pixels to which voltage is applied could be built up.

When the liquid crystal display is used as a negative type display, the front polarizer 2 and the rear polarizer 3 are arranged in such a manner that the respective polarizing axis C and D thereof orient in substantially the same direction, normally at the same time the polarizing axis C of the front polarizer 2 is made to orient in the same direction as a rubbing direction A in which a liquid crytal molecule on the displaying surface (front side) of the liquid crystal layer 1 orients. Further, in the TN type liquid crystal display device, the liquid crystal molecule on the front side of the liquid crystal layer 1 is twisted by 90° in molecular orientation with respect to the liquid crystal molecule on the rear side thereof, as shown in Fig. 3. Accordingly, the polarizing axis D of the rear polarizer 3 is perpendicular to a rubbing direction B on the rear side of the liquid crystal layer 1. By virtue of making the polarizing axis C of the front polarizer 2 be in the same direction as the polarizing axis D of the rear polarizer 2, linear polarized light transmitted through the rear polarizer 3, then polarizing direction is twisted 90° by transmitting through the liquid crystal layer 1 when voltage is not applied across the two electrodes. For that reason, the direction of the linear polarized light is perpendicular to the polarizing axis C of the front polarizer 2 so as to be cut off. Accordingly, the background color can be seen to be dark. On the other hand, when voltage is applied across the two electrode, the liquid crystal molecule is built and light is not applied thereto. For that reason, light could be transmitted to become a negative type display lighting only the pixels to which voltage is applied. In contrast, devices of the mode wherein the polarizing axis C is perpendicular to the polarizing axis D are called positive mode liquid crystal devices.

As described above, in the negative type liquid crystal devices having a twisted nematic liquid crystal layer, light which transmits the liquid crystal layer is cut off by the polarizer thereof when voltage is not applied to the electrodes; hence, the devices exhibit a dark color as a background. However, when viewed obliquely, the display surface is seen to be reddish due to optical properties, which degrades the display quality thereof. This phenomenon is particularly remarkable when the display surface is viewed at a certain angle but not at right angle.

An object of the present invention is to resolve the above-mentioned problems, and to provide a liquid crystal display device wherein a display surface is not seen to be reddish and the color tone thereof is not degraded even when the display surface is viewed obliquely.

According to the present invention, there is provided a liquid crystal display device comprising a pair of transparent substrates, a twisted nematic type liquid crystal layer interposed between said transparent substrates, a pair of polarizers, each of which is arranged on the outside surface of said transparent substrate, and an orientation film formed on the side of said liquid crystal layer of said transparent substrates, each of said polarizers being formed in such a manner that a polarizing axis of said polarizers is the same and said polarizing axis is perpendicular to one of rubbing direction of said orientation film, said liquid crystal display further including a phase shifting plate interposed between said transparent substrate located in a side where the rubbing direction of said orientation film is perpendicular to the polarizing axis of said polarizer.

It is preferable that the phase shifting plate is disposed such taht an optical axis thereof orients at an angle of 90° ± 10° with respect to an polarizing axis of the polarizer on the side opposite to the display side of the liquid crystal layer.

It is preferable that said phase shifting plate has a thickness in retardation being in the range of 240 to 320 nm.

It is preferable that said liquid crystal layer has a thickness in retardation being in a range of 0.53 to 0.56 $\mu$m.

It is preferable that said liquid crystal layer has a thickness in retardation being in the range of 1.20 to 1.32 $\mu$m.

It is preferable that said phase shifting plate is made of polycarbonate or polyvinyl alcohol.

It is preferable that the rubbing direction is the same as the polarizing axis on the display surface.

In the present invention the phase shifting plate is interposed between the transparent substrate and the polarizer disposed on the side where the rubbing direction of the orientation film formed on the side of the liquid crystal layer is perpendicular to the polarizing axis of the polarizer so that reddish colors which tends to generate in the negative type TN liquid crystal display device, back ground color of which is dark, are negated. Accordingly, even if the display surface is viewed at different angles which is in the range from 0° to 40° with respect to a normal line to the display surface, the reddish colors as well as colors of other wavelengths can be negated, whereby the display quality can be prevented from degrading due to a change in color tone. Thus, a viewer can view the negative type TN liquid display with dark background, which brings little fatigue to the viewer so that superior viewing property can be obtained.

Fig. 1 is an exploded, fragmentary perspective view showing a liquid crystal display device embodying the present invention;

Fig. 2 is a fragmentary sectional view showing a liquid crystal display device embodying the present invention;

Fig. 3 is an exploded, fragmentary perspective view showing a conventional liquid crystal display device; and

Fig. 4 is a fragmentary sectional view showing a conventional liquid crystal display device.

Now, the present invention will be described with reference to the drawings.

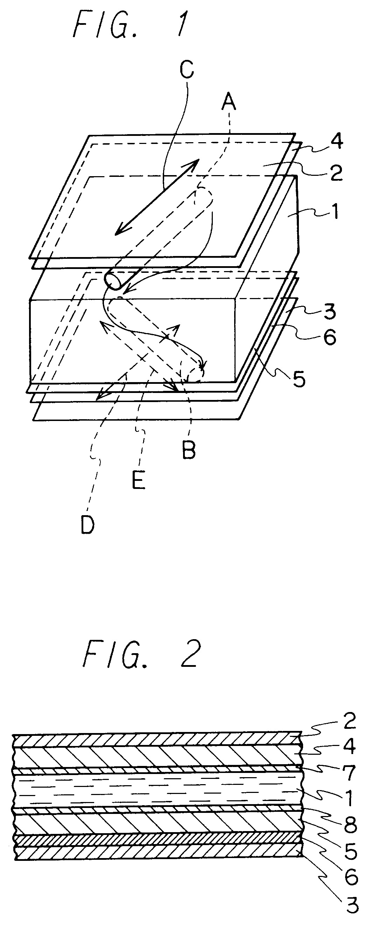

In Figs. 1 and 2, each of reference numerals shows the same portion as that of Figs. 3 and 4. Numeral 6 denotes a phase shifting plate.

Attempts to prevent a change of a color tone to a reddish tone in such a manner that the phase shifting plate 6 is interposed with use of a phase shifting plate 6 even when a liquid crystal display surface is viewed obliquely has been undergone. The phase shifting plate 6 was formed of a uniaxial oriented polymer film which serves to produce a retardation between an extraordinary ray and an ordinary ray. The film resulted from heat-stretching of a polymer sheet, for example, made of polycarbonate.

The relationship between retardation R and refractive indexes $n_e$ and $n_o$ is represented by the following equation:

$$R = |n_e - n_o| \times d = \Delta nd$$

where d is the thickness of the phase shifting plate 6, and $n_e$ and $n_o$ are refractive indexes with respect to an extraordinary ray and an ordinary ray, respectively.

A change of color tone was investigated by varying the retardation of the phase shifting plate 6 and changing the location thereof.

Firstly, after the phase shifting plate 6 was interposed between a front transparent substrate 4 and a front polarizer 2 which were disposed on the displaying side of a liquid crystal layer 1, the orientation of the optical axis and retardation R (the value $\Delta n_2 d_2$ with the thickness of the phase shifting plate 6 assuming $d_2$) of the phase shifting plate 6 were varied. As a result, no improvement was found in a change of color tone. Rather, there were some cases where the color tone became more reddish than to degrade the display quality when the value $\Delta n_2 d_2$ assumed certain values. Alternatively, after the phase shifting plate 6 was disposed on the external side of the front polarizer 2, or above the front polarizer 2 in Fig. 1, the orientation of the optical axis and retardation R of the phase shifting plate 6 were varied, however, this resulted in the same effect as above.

Next, after the phase shifting plate 6 was disposed on the external side of the rear polarizer 3, or under the rear polarizer 3 in Fig. 1, the orientation of the optical axis and retardation R of the phase shifting plate 6 were varied, however, this also led to no improvement as mentioned above.

Alternatively, the polarizer 6 was interposed between the rear polarizer 3 and the rear transparent substrate 5. As a result, a reddish color tone was apparently reduced to improve the display quality. Further, the orientation of the optical axis and retardation R of the polarizer 6 were varied, with the result that there occured a substantial reduction in a change of color tone at a certain point. This phenomenon will be described in more detail.

Referring to Figs. 1 and 2, a TN type liquid crystal device is arranged in such a manner that the rubbing direction A on the front side of the liquid crystal layer 1 (displaying side thereof) is perpendicular to the rubbing direction B on the rear side thereof (opposite side to the displaying side), like a conventional liquid crystal display device. Accordingly, liquid crystal molecules on the front and rear sides orient in the rubbing directions A and B, respectively. Further, normally as shown in Fig. 1 the polarizing axis C of the front polarizer 2 is made to orient in the same direction as the rubbing direction A of the orientation film 7, the polarizing axis D of the rear polarizer 3 is perpendicular to the rubbing direction B of the orientation film of the rear side.

At this time, there has been research as to where the phase shifting plate should be formed under the locational relationship of the front and the rear as mentioned above. Even if the locational relationship is reversed, the same result can be obtained in accordance with the reversibility principle.

The present invention is characterized by interposing the phase shifting plate 6 between the rear transparent substrate 5 and the rear polarizer 3 (i.e. between the transparent substrate and the polarizer where the rubbing direction is crossed with the polarizing axis in such a manner as to be perpendicular to each other) which are disposed on the side opposite to the displaying side of the liquid crystal layer 1. The optical axis E of the phase shifting plate 6 was varied, so that it was found that when the direction of the optical axis E of the phase shifting plate was the same direction as that of the polarizing axis D of the rear polarizer 3, the color tone became reddish most, and that such phenomenon was, however, gradually improved as the direction of the optical axis E approached such as direction as to be perpendicular to the polarizing axis D of the rear polarizer 3. It is most preferable that the optical axis E is perpendicular to the polarizing axis D, however, a significant improvement was found in a change of color tone within the range of $90° \pm 10°$. The relation between the position of the phase shifting plate 6 and the extent of improvement in a change of color tone is shown in Table 1, wherein the extent of improvement in a change of color tone was evaluated visually, the viewing angle ranged from $0°$ to $40°$ with respect to a normal line to the display surface, the retardation R of the phase shifting plate 6 was 295 nm; and the phase shifting plate 6 is interposed between the transparent substrate and the polarizer on either the front or rear side. Besides, in Table 1 the front side means by the side which is the same direciton of the rubbing direciton as that of the polarizing axis of the polarizer, and the rear side means by the side wherein the rubbing direction is perpendicular to the polarizing axis of the polarizer.

Table 1

| Measurement No. | Location of the Phase shifting Plate | Optical Axis Orientation | Visual Evaluation |
|---|---|---|---|
| 1 | On the front side | Parallel to the polarizing axis | X |
| 2 | On the front side | Perpendicular to the polarizing axis | X |
| 3 | On the rear side | Parallel to the polarizing axis | X |
| 4 | On the rear side | Perpendicular to the polarizing axis | ○ |
| 5 | On the rear side | 85° with respect to the polarizing axis | ○ |
| 6 | On the rear side | 80° with respect to the polarizing axis | △ |
| 7 | On the rear side | 70° with respect to the polarizing axis | X |

Further, the retardation ($\Delta n_2 d_2$) of the phase shifting plate 6 disposed between the rear transparent substrate 5 and the rear polarizer 3 was varied, so that the optical direction E thereof orients substantially perpendicular to the polarizing axis D of the rear polarizer 3. Thereby a change of color tone was improved. Then, the optimal value of the retardation was determined in such a case that one retardation ($\Delta n_1 d_1$) of the liquid crystal layer is 0.53 to 0.56 $\mu$m, the other is 1.20 to 1.32 $\mu$m.

Example 1

In this case, in the arrangement described above, a TN type crystal having a retardation $\Delta n_1 d_1$ of about 0.53 $\mu$m to about 0.56 $\mu$m as the liquid crystal layer 1, polarizer formed of an iodine-containing material as the polarizers 2 and 3 having about 0.2 mm thick, and phase shifting plates of a polycarbonate material

4

having respective retardations R which is in the range of 162 to 350 nm as the phase shifting plate 6 were used. The extent of a change of color tone was visually evaluated with the retardation R of the phase shifting plate 6 varied, and the results of which are shown in Table 2. To be noted that this evaluation also was performed with the viewing angle ranging from 0° to 40° with respect to a normal line to the display surface.

Table 2

| Value of R (nm) | 162 | 190 | 232 | 247 | 274 | 295 | 311 | 325 | 350 |
|---|---|---|---|---|---|---|---|---|---|
| Visual Evaluation | X | X | △ | ○ | ○ | ○ | ○ | △ | X |

As can be understood from Table 2, the retardation R which is in the range of 240 to 320 nm was found to control a change of color tone to a negligible degree. In addition, it was found that even in a phase shifting plate the retardation of which is in a broader range of 230 to 340 nm could be put to practical use without any substantial problem.

Example 2

Further, the retardation R of the phase shifting plate 6 was varied within a range from 190 to 347 nm in the same way as Example 1 by using the same TN type liquid crystal except that the retardation is about 1.20 $\mu$m to about 1.32 $\mu$m, so that the degree of the change of color tone was evaluated. The result of the evaluation is shown in Table 3.

Table 3

| Value of R (nm) | 190 | 232 | 247 | 274 | 295 | 311 | 325 | 347 |
|---|---|---|---|---|---|---|---|---|
| Visual Evaluation | X | X | △ | ○ | ○ | ○ | ○ | △ |

As shown in Table 3, if the retardation ($\Delta n_2 d_2$) is in the range of 240 to 320 nm, it was found that the change of the color tone can be prevented to such a degree as to be ingnored, and the TN type liquid crystal wherein the retardation is in the range of 230 to 340 nm can be used without substantially causing any problem.

Example 3

The liquid crystal layer 1, the polarizer 2, 3, the transparent substrate 4, 5 and the phase shifting plate 6 were arranged in the same way as Examples 1 and 2, then the display surface and the light source was reversed with each other (i.e. the front side and the rear side in Examples 1 and 2 were reversed) so that the change of the color tone was evaluated. The same result as Examples 1 and 2 was obtained. Besides, in each of the Examples 1 to 3, the number of the phase shifting plate was one. However, the number of the phase shifting plate can be more than one if the above mentioned retardation can be obtained.

As described above, interposition of the phase shifting plate 6 between the transparent substrate 5 located in the side where the rubbing direction of the TN type liquid crystal layer is perpendicular to the polarizing axis of the polarizer and the polarizer enables to reduce a change of color tone, thereby the display quality of an intended liquid crystal display device was significantly improved even in the case of the negative type display. Further, disposing the phase shifting plate 6 so that the optical direction thereof orients 90° ± 10°, more preferably 90° ± 5° with respect to the polarizing axis of the rear polarizer 3. Thereby, it becomes possible to further reduce control a change of color tone. In addition, setting the retardation of the phase shifting plate 6 which is in the range of 230 to 340 nm, more preferably 240 to 320 nm regardless of the material thereof can bring a great reduction in a change of color tone to, for example, a reddish tone even when the display surface of a liquid crystal display devce is viewed obliquely, thereby the display quality thereof was significantly improved. Accordingly, even if the phase shifting plate is formed of a material other than that described above, a change of color tone to a reddish tone can be greatly reduced if the position of the phase shifting plate and the retardation thereof are determined as mentioned above.

As has been described, according to the present invention interposition of a phase shifting plate between a transparent substrate located in the side where the rubbing direction of the liquid crystal layer is perpendicular to the polarizing axis the polarizer of a liquid crystal display device using the TN type liquid crystal and a rear polarizer thereof makes it possible to minimize a change of color tone of the background to a reddish tone in a negative type liquid crystal display device when the display surface is viewed obliquely. Accordingly, the display contrast can be improved, thus contributing to a significant improvement in the display quality. As a result, the liquid crystal display device can be viewed without bringing a viewer a feeling of fatigue or discomfort.

Further, in the present invention the phase shifting plate is disposed so that the optical direction thereof orients 90° ± 10° with respect to the polarizing axis of the rear polarizer, on the other side the retardation of the phase shifting plate is set so as to be in the range of 230 to 340 nm, whereby a change of color tone can be further mitigated to improve the display quality of the liquid crystal display device to a greater extent.

Though several embodiments of the present invention are described above, it is to be understood that the present invention is not limited only to the above-mentioned and various changes and modifications may be made in the invention without departing from the spirit and scope thereof.

A liquid crystal display device composed of a pair of transparent substrates, a twisted nematic type liquid crystal layer interposed between said transparent substrates, a pair of polarizers, each of which is arranged on the outside surface of said transparent substrate, and an orientation film formed on the side of said liquid crystal layer of said transparent substrates, each of said polarizers being formed in such a manner polarizers that a polarizing axis of said polarizers is the same and said polarizing axis is perpendicular to one of rubbing direction of said orientation film, said liquid crystal display further including a phase shifting plate interposed between said transparent substrate located in a side where the rubbing direction of said orientation film is perpendicular to the polarizing axis of said polarizer.

## Claims

1. A liquid crystal display device comprising a pair of transparent substrates, a twisted nematic type liquid crystal layer interposed between said transparent substrates, a pair of polarizers, each of which is arranged on the outside surface of said transparent substrate, and an orientation film formed on the side of said liquid crystal layer of said transparent substrates, each of said polarizers being formed in such a manner that a polarizing axis of said polarizers is the same and said polarizing axis is perpendicular to one of rubbing direction of said orientation film, said liquid crystal display further including a phase shifting plate interposed between said transparent substrate located in a side where the rubbing direction of said orientation film is perpendicular to the polarizing axis of said polarizer.

2. The liquid crystal display of Claim 1, wherein said phase shifting plate is disposed such that an optical axis thereof orients at an angle of 90° ± 10° with respect to an polarizing axis of the polarizer on the side opposite to the display side of the liquid crystal layer.

3. The liquid crystal display device of Claim 1, wherein said phase shifting plate has a thickness in retardation being in the range of 240 to 320 nm.

4. The liquid crystal display device of Claim 3, wherein said liquid crystal layer has a thickness in retardation being in a range of 0.53 to 0.56 $\mu$m.

5. The liquid crystal display device of Claim 3, wherein said liquid crystal layer has a thickness in retardation being in the range of 1.20 to 1.32 $\mu$m.

6. The liquid crystal display device of Claim 3, wherein said phase shifting plate is made of polycarbonate or polyvinyl alcohol.

7. The liquid crystal display device of Claim 1, wherein the rubbing direction is the same as the polarizing axis on the display surface.

## FIG. 1

## FIG. 2

# FIG. 3
## PRIOR ART

C    A

2

1

3

D

B

# FIG. 4

## PRIOR ART

2
4
7
1
8
5
3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-8 404 403 (BOSCH GMBH)<br>* page 3, line 11 - page 6, line 02; figure 1 *<br>--- | 1,2 | G02F1/1335 |
| X | GB-A-2 171 549 (CITIZEN WATCH)<br>* page 4, line 95 - page 5, line 57 *<br>* page 11, line 93 - line 129; figure 25 *<br>--- | 1,2 | |
| A | EP-A-0 277 804 (SUMITOMO CHEMICAL)<br>* column 1, line 11 - column 2, line 18 *<br><br>----- | 3-6 | |
| | | | TECHNICAL FIELDS SEARCHED (Int. Cl.5 ) |
| | | | G02F |

The present search report has been drawn up for all claims

| Place of search | Date of completion of the search | Examiner |
|---|---|---|
| THE HAGUE | 06 SEPTEMBER 1993 | DIOT P.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................
& : member of the same patent family, corresponding
   document